# EUROPEAN PATENT APPLICATION

(11) **EP 4 775 374 A1**
(43) Date of publication of application: **15.07.2026**
(21) Application number: 25869656.6
(22) Date of filing: 17.10.2025
(51) Int. Cl.: B29C 43/58

(54) **METHOD FOR PRODUCING POLYTETRAFLUOROETHYLENE MOLDED BODY AND POLYTETRAFLUOROETHYLENE MOLDED BODY**

(30) Priority: 18.10.2024 JP 2024184429
(71) Applicant: DAIKIN INDUSTRIES, LTD., Osaka-shi, Osaka 530-0001 (JP); National University Corporation Yamagata University, Yamagata-shi, Yamagata 990-8560 (JP)
(72) Inventor: The designation of the inventor has not yet been filed
(74) Representative: Hoffmann Eitle
(86) International application number: PCT/JP2025/036647
(87) International publication number: WO 2026/084057

(57) **Abstract**

The disclosure provides a method for producing a polytetrafluoroethylene molded article, capable of improving the tensile strength of the resulting polytetrafluoroethylene molded article, regardless of whether the polytetrafluoroethylene used is a recycled product or a virgin product, without using a special infrared irradiation device and a rubber mold, and a polytetrafluoroethylene molded article. Provided is a method for producing a polytetrafluoroethylene molded article, including a rolling step of rolling polytetrafluoroethylene at 50 MPa or higher to obtain a molded article.

## Description

### TECHNICAL FIELD

The disclosure relates to methods for producing polytetrafluoroethylene molded articles and polytetrafluoroethylene molded articles.

### BACKGROUND ART

Generally, when recycled polytetrafluoroethylene powder (recycled product) is molded by a conventional method, the resulting molded article tends to have inferior strength and other properties to molded articles made from unfired polytetrafluoroethylene powder (virgin product). As a method for solving this, Patent Literature 1 considers molding using infrared irradiation.

### CITATION LIST

### - Patent Literature

Patent Literature 1: JP 2024-027916 A

### SUMMARY OF INVENTION

### - Technical Problem

The method of Patent Literature 1 however leaves room for improvement in that it requires a special infrared irradiation device and a rubber mold, and that some types of rubber molds may not be able to withstand the molding temperature of polytetrafluoroethylene.

Improvements in the strength of polytetrafluoroethylene are being sought not only in recycled products but also in virgin products.

The disclosure aims to provide a method for producing a polytetrafluoroethylene molded article, capable of improving the tensile strength of the resulting polytetrafluoroethylene molded article, regardless of whether the polytetrafluoroethylene used is a recycled product or a virgin product, without using a special infrared irradiation device and a rubber mold, and a polytetrafluoroethylene molded article.

### - Solution to Problem

The disclosure (1) relates to a method for producing a polytetrafluoroethylene molded article, including a rolling step of rolling polytetrafluoroethylene at 50 MPa or higher to obtain a molded article.

The disclosure (2) relates to the method for producing a polytetrafluoroethylene molded article according to the disclosure (1),
wherein the rolling step is performed at 200°C or higher.

The disclosure (3) relates to the method for producing a polytetrafluoroethylene molded article according to the disclosure (1) or (2),
wherein the rolling step is performed at a pressure of 100 to 2000 MPa and a temperature of 200°C to 600°C.

The disclosure (4) relates to the method for producing a polytetrafluoroethylene molded article according to any of the disclosures (1) to (3), further including, prior to the rolling step,
a first pre-molding step of compressing the polytetrafluoroethylene at lower than 200°C to obtain a pre-molded article and
a firing step of heating the pre-molded article to a temperature equal to or higher than a melting point of the polytetrafluoroethylene to obtain a fired article,
wherein the rolling step involves rolling the fired article.

The disclosure (5) relates to the method for producing a polytetrafluoroethylene molded article according to the disclosure (4),
wherein the first pre-molding step is performed at a pressure of 5 to 45 MPa and a temperature of 30°C or higher and lower than 200°C, and
the firing step is performed at a heating temperature of 340°C to 500°C for a heating time of 5 minutes to 200 hours.

The disclosure (6) relates to the method for producing a polytetrafluoroethylene molded article according to any of the disclosures (1) to (5),
wherein the polytetrafluoroethylene has a history of being heated to a temperature equal to or higher than a melting point thereof and is non-melt-flowable.

The disclosure (7) relates to a polytetrafluoroethylene molded article obtainable by the method for producing a polytetrafluoroethylene molded article according to any of the disclosures (1) to (6),
the polytetrafluoroethylene molded article having a tensile strength of 25 MPa or higher and
a tensile elongation of 100% or higher.

The disclosure (8) relates to the polytetrafluoroethylene molded article according to the disclosure (7),
wherein the tensile strength is 25 to 60 MPa and the tensile elongation is 100% to 400%.

The disclosure (9) relates to a polytetrafluoroethylene molded article having a tensile strength of 25 MPa or higher,
a tensile elongation of 100% or higher, and
an endothermic peak temperature during a first temperature rise in measurement with a differential scanning calorimeter of 330°C or higher.

The disclosure (10) relates to the polytetrafluoroethylene molded article according to the disclosure (9),
wherein the tensile strength is 25 to 60 MPa,
the tensile elongation is 100% to 400%, and
the endothermic peak temperature during the first temperature rise in measurement with a differential scanning calorimeter is 330°C to 450°C.

The disclosure (11) relates to a polytetrafluoroethylene molded article having an endothermic peak temperature during a first temperature rise at least 2°C higher than an endothermic peak temperature during a second temperature rise in measurement with a differential scanning calorimeter.

The disclosure (12) relates to the polytetrafluoroethylene molded article according to the disclosure (11),
wherein a difference obtained by subtracting the endothermic peak temperature during the second temperature rise from the endothermic peak temperature during the first temperature rise in measurement with a differential scanning calorimeter is 2°C to 30°C.

### - Advantageous Effects of Invention

The disclosure can provide a method for producing a polytetrafluoroethylene molded article, capable of improving the tensile strength of the resulting polytetrafluoroethylene molded article, regardless of whether the polytetrafluoroethylene used is a recycled product or a virgin product, without using a special infrared irradiation device and a rubber mold, and a polytetrafluoroethylene molded article.

### DESCRIPTION OF EMBODIMENTS

### <Method for producing polytetrafluoroethylene molded article>

The production method of the disclosure includes a rolling step of rolling polytetrafluoroethylene (PTFE) at 50 MPa or higher to obtain a molded article.

PTFE molded articles are commonly produced by compression (pre-molding) of PTFE powder and subsequent sintering. In the case of virgin PTFE, molecular chains are drawn out from the powder particles by compression and then entangled through sintering, and the particles fuse together in that state. This is believed to result in high strength. In the case of recycled PTFE, since molecular chains are already entangled, compression does not draw out the molecular chains, and it is considered that high strength cannot be achieved. In contrast, in the production method of the disclosure, the rolling step in which compression is performed at a higher pressure than that in conventional methods can draw out the molecular chains even from recycled PTFE in which the molecular chains are already entangled. This is believed to result in high strength.

The production method of the disclosure is particularly effective for recycled PTFE with which high strength is difficult to achieve. Still, this effect is not limited to recycled PTFE. The production method of the disclosure exerts the effect of improving the strength also with virgin PTFE. This is believed to be because more molecular chains are pulled out in the rolling step than in conventional methods.

In order to easily achieve the effect of improving the strength, PTFE rolled in the rolling step is preferably a fired article.

The pressure in the rolling step should be 50 MPa or higher, and is preferably 100 MPa or higher, more preferably 150 MPa or higher, still more preferably 200 MPa or higher. The upper limit may be, but is not limited to, 2000 MPa or lower.

The temperature in the rolling step is preferably 200°C or higher, more preferably 230°C or higher, still more preferably 250°C or higher, while it is preferably 600°C or lower, more preferably 500°C or lower, still more preferably 400°C or lower.

In order to achieve good tensile elongation as well as good tensile strength, the temperature in the rolling step is preferably 310°C or higher, more preferably 330°C or higher.

In order to increase the degree of crystallinity, the temperature in the rolling step is preferably 320°C or lower, more preferably 300°C or lower, still more preferably 280°C or lower.

The rolling step is preferably performed at a pressure of 100 to 2000 MPa and a temperature of 200°C to 600°C, more preferably at a pressure of 150 to 2000 MPa and a temperature of 230°C to 500°C, still more preferably at a pressure of 200 to 2000 MPa and a temperature of 250°C to 400°C.

The PTFE may have a history of being heated to a temperature equal to or higher than a melting point thereof and is non-melt-flowable. PTFE having such properties is normally recycled PTFE, for which the production method of the disclosure is particularly effective.

The PTFE preferably has a melting point within a temperature range lower than 333°C. The temperature range is more preferably lower than 332°C, still more preferably lower than 331°C, while it is preferably 250°C or higher, more preferably 300°C or higher.

A melting point within the above range indicates that the PTFE has a history of being heated to the melting point thereof or higher.

The PTFE may have a melting point within a temperature range of 333°C or higher.

The melting point of PTFE herein is the temperature corresponding to the local minimum on a heat-of-fusion curve obtainable by increasing the temperature at a rate of 10°C/min using a differential scanning calorimeter (DSC). In the case where one melting peak includes two or more local minimums, the temperature corresponding to the highest one is taken as the melting point regardless of the size of the peak area.

The term "non-melt-flowable" herein means that the melt flow rate (MFR) is lower than 0.25 g/10 min, preferably lower than 0.10 g/10 min, more preferably 0.05 g/10 min or lower.

The MFR herein is a value obtained in conformity with ASTM D1238 using a melt indexer, as the mass (g/10 min) of a polymer flowing out of a nozzle (inner diameter: 2.095 mm, length: 8 mm) per 10 minutes at a measurement temperature of 372°C and a load of 5 kg. If no polymer flows out under this condition, the MFR is 0 g/10 min.

Also, if the thickness of a molded article prepared by compression-molding a PTFE to provide a pre-molded article (non-fired molded article) and heating this pre-molded article at a temperature equal to or higher than the melting point of the PTFE for one hour or longer is smaller than the thickness before heating by less than 20% or is greater than the thickness before heating, the PTFE is determined as being non-melt-flowable.

The PTFE may be either a tetrafluoroethylene (TFE) homopolymer consisting of a TFE unit or a modified PTFE containing a TFE unit and a modifying monomer unit based on a modifying monomer copolymerizable with TFE.

The modifying monomer may be any monomer copolymerizable with TFE. Examples thereof include a perfluoroolefin such as hexafluoropropylene (HFP); a chlorofluoroolefin such as chlorotrifluoroethylene (CTFE); a hydrogen-containing fluoroolefin such as trifluoroethylene or vinylidene fluoride (VdF); a perfluorovinyl ether; a perfluoroalkyl allyl ether; a (perfluoroalkyl)ethylene; and ethylene. One modifying monomer may be used alone or two or more modifying monomers may be used in combination.

Examples of the perfluorovinyl ether include, but are not limited to, unsaturated perfluoro compounds represented by the following formula (1):

CF₂=CF-ORf (1)

wherein Rf is a perfluoro organic group. The term "perfluoro organic group" herein means an organic group in which all hydrogen atoms bonded to any carbon atom are replaced by fluorine atoms. The perfluoro organic group may have an ether oxygen.

Examples of the perfluorovinyl ether include a perfluoro(alkyl vinyl ether) (PAVE) represented by the formula (1) in which Rf is a C1-C10 perfluoroalkyl group. The perfluoroalkyl group preferably has a carbon number of 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group. The PAVE is preferably perfluoro(propyl vinyl ether) (PPVE) in which the perfluoroalkyl group is a perfluoropropyl group.

Examples of the perfluorovinyl ether also include:
those represented by the formula (1) wherein Rf is a C4-C9 perfluoro(alkoxy alkyl) group;
those represented by the formula (1) wherein Rf is a group represented by the following formula: 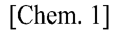 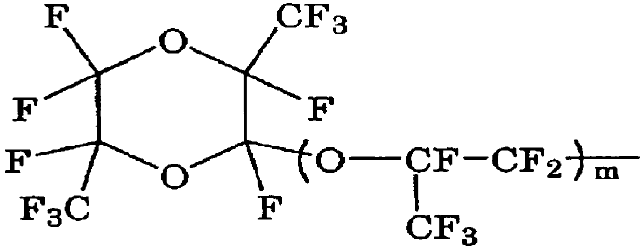 wherein m is an integer of 0 or 1 to 4; and
those represented by the formula (1) wherein Rf is a group represented by the following formula: 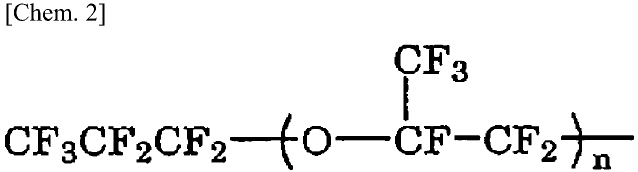 wherein n is an integer of 1 to 4.

Non-limiting examples of the (perfluoroalkyl)ethylene include (perfluorobutyl)ethylene (PFBE), (perfluorohexyl)ethylene (PFHE), and (perfluorooctyl)ethylene.

The modifying monomer in the modified PTFE preferably includes at least one selected from the group consisting of HFP, CTFE, VdF, PPVE, PFBE, and ethylene. It more preferably includes at least one selected from the group consisting of HFP and CTFE.

The amount of the modifying monomer unit in the modified PTFE is preferably within a range of 0.00001 to 1.0% by mass. The lower limit of the amount of the modifying monomer unit is more preferably 0.0001% by mass, still more preferably 0.001% by mass, further preferably 0.005% by mass, even more preferably 0.010% by mass, particularly preferably 0.030% by mass. The upper limit of the amount of the modifying monomer unit is preferably 0.90% by mass, more preferably 0.50% by mass, still more preferably 0.40% by mass, further preferably 0.30% by mass.

The modifying monomer unit herein means a moiety that is part of the molecular structure of a modified PTFE and is derived from a modifying monomer.

The PTFE preferably has a standard specific gravity (SSG) of 2.130 to 2.280. The SSG is more preferably 2.220 or less, still more preferably 2.200 or less. The SSG is preferably 2.140 or more, still more preferably 2.150 or more. The SSG is determined by the immersion method in conformity with ASTM D792 using a sample molded in conformity with ASTM D4895-89.

Examples of the PTFE include a PTFE having non-melt secondary processibility and a PTFE having melt secondary processibility. The PTFE herein preferably has non-melt secondary processibility.

The non-melt secondary processibility herein means a property of a polymer with which the melt flow rate cannot be measured at a temperature higher than the crystallization melting point in conformity with ASTM D1238 and D2116.

The PTFE having non-melt secondary processibility is obtainable by suspension polymerization or emulsion polymerization. A PTFE powder obtainable by suspension polymerization is called molding powder and a PTFE powder obtainable by emulsion polymerization is called fine powder. In suspension polymerization, suspension-polymerized particles obtained by polymerization are coarsely pulverized to obtain coarsely pulverized particles, and the coarsely pulverized particles are further finely pulverized to obtain finely pulverized particles. The molding powder herein refers to finely pulverized particles. In emulsion polymerization, an aqueous dispersion in which primary particles of PTFE are stably dispersed in an aqueous medium is obtained, and the primary particles in the aqueous dispersion are coagulated and dried to obtain a fine powder.

An example of the melt-secondary-processible PTFE is a low-molecular-weight PTFE, which is obtainable by suspension polymerization or emulsion polymerization. Alternatively, it is obtainable by subjecting a powder or molded article of non-melt-secondary-processible PTFE to electron beam irradiation or pulverization.

The PTFE powder preferably includes at least one selected from the group consisting of finely pulverized particles, coarsely pulverized particles, and granulated particles. Finely pulverized particles are suitable in that the resulting PTFE molded article has excellent physical properties such as electrical insulation and tensile elongation, and is also low in cost. Granulated particles are suitable in that they provide high productivity in the molding process.

Coarsely pulverized particles are obtainable by coarsely pulverizing suspension-polymerized particles obtained in suspension polymerization. Finely pulverized particles are obtainable by further finely pulverizing coarsely pulverized particles. Granulated particles are obtainable by granulating finely pulverized particles using an aqueous medium or an organic solvent containing a surfactant, for example, for the purpose of improving the flowability of the powder.

The particles obtained by suspension polymerization are of various sizes and include particles with whisker-like protrusions due to pulverization.

The particles obtained by emulsion polymerization are secondary particles consisting of aggregates of uniform primary particles that have an average primary particle size of 100 nm to 400 nm and show an ellipsoidal particle shape.

The recycled powder (recycled particles) obtained by pulverizing a PTFE molded article shows a scaly particle shape. Such a particle form can be confirmed by microscopic observation.

The finely pulverized particles preferably have an average primary particle size of 10 µm or more and less than 100 µm. The coarsely pulverized particles preferably have an average primary particle size of 50 µm or more and less than 500 µm. The granulated particles preferably have an average primary particle size of 400 µm or more and less than 1200 µm.

The finely pulverized particles preferably have an apparent density of 100 g/L or higher and lower than 600 g/L. The coarsely pulverized particles preferably have an apparent density of 400 g/L or higher and lower than 700 g/L. The granulated particles preferably have an apparent density of 600 g/L or higher and lower than 1200 g/L.

The average primary particle size and the apparent density can be measured in conformity with ASTM D4894.

The production method of the disclosure preferably further includes, prior to the rolling step, a first pre-molding step of compressing the PTFE at lower than 200°C to obtain a pre-molded article and a firing step of heating the pre-molded article to a temperature equal to or higher than the melting point of the PTFE to obtain a fired article, wherein the rolling step involves rolling the fired article. This enables the easy production of a molded article even when the PTFE is in the form of powder.

The pressure in the first pre-molding step is preferably 5 MPa or higher, more preferably 10 MPa or higher, still more preferably 15 MPa or higher, while it is preferably 45 MPa or lower, more preferably 35 MPa or lower, still more preferably 25 MPa or lower.

The temperature in the first pre-molding step should be lower than 200°C, and is preferably lower than 150°C, more preferably lower than 100°C. The lower limit may be, but is not limited to, 30°C or higher.

In the case of using recycled PTFE which tends to have lower cohesiveness than virgin PTFE, a second pre-molding step may be performed after the first pre-molding step and before the firing step, in which the pre-molded article is compressed at 200°C or higher. In this case, the pre-molded article resulting from the second pre-molding step may be heated in the firing step.

It is to be noted that the second pre-molding step is not essential even in the case of using recycled PTFE, and may be carried out as needed.

The temperature in the second pre-molding step should be 200°C or higher, and is more preferably 250°C or higher, still more preferably 280°C or higher, while it is preferably 430°C or lower, more preferably 400°C or lower, still more preferably 370°C or lower.

The pressure in the second pre-molding step is preferably 5 MPa or higher, more preferably 10 MPa or higher, while it is preferably 45 MPa or lower, more preferably 35 MPa or lower, still more preferably 25 MPa or lower.

The heating temperature in the firing step should be equal to or higher than the melting point of the PTFE, and is preferably 340°C or higher, more preferably 350°C or higher, still more preferably 360°C or higher, further preferably 370°C or higher, while it is preferably 500°C or lower, more preferably 480°C or lower, still more preferably 460°C or lower, further preferably 440°C or lower.

The heating temperature refers to the maximum temperature during the firing step.

The heating time in the firing step may be appropriately adjusted in accordance with the size of the subject. Still, the heating time is preferably 5 minutes or longer, more preferably 30 minutes or longer, still more preferably 60 minutes or longer, while it is preferably 200 hours or shorter, more preferably 150 hours or shorter, still more preferably 100 hours or shorter.

The heating time refers to the holding time at the maximum temperature during the firing step.

The temperature-increasing rate in the firing step is preferably 0.05°C/min or faster, more preferably 0.1°C/min or faster, still more preferably 0.2°C/min or faster, while it is preferably 3°C/min or slower, more preferably 2.5°C/min or slower, still more preferably 2°C/min or slower. Since heating causes expansion and makes cracks more likely to occur, the larger the subject, the slower the temperature-increasing rate should be.

In the firing step, it is preferable to gradually cool the subject after it has reached the maximum temperature. The cooling rate in this case is preferably 0.01°C/min or faster, more preferably 0.05°C/min or faster, still more preferably 0.1°C/min or faster, while it is preferably 2°C/min or slower, more preferably 1.5°C/min or slower, still more preferably 1°C/min or slower.

At around 310°C to 340°C, it is particularly preferable to slow down the cooling rate. The cooling rate in this temperature range may be 0.01°C/hour or faster, 0.05°C/hour or faster, or 0.1°C/hour or faster, while it may be 2°C/min or slower, 1.5°C/min or slower, or 1°C/min or slower. The larger the subject, the slower the cooling rate should be.

The rolling step, the first pre-molding step, and the second pre-molding step may be carried out by any method, and a common molding machine such as a heat press machine can be used. Similarly, the firing step may be carried out by any method, and a common heating machine such as an electric muffle furnace can be used.

The production method of the disclosure can provide a PTFE molded article having excellent physical properties such as tensile strength, which will be described below.

Adjustment of the conditions (e.g., pressure, temperature) during the production enables adjustment of these physical properties. For example, setting the temperature in the rolling step below the melting point of the PTFE can improve the degree of crystallinity. The mechanism of this is not clearly known. Still, this is thought to be because PTFE has a transition point near room temperature and includes molecular chains with high mobility, so when stress is applied even below the melting point, microcrystals tend to form in the amorphous portion that has been in a supercooled state.

The tensile strength of the PTFE molded article is preferably 25 MPa or higher, more preferably 30 MPa or higher, still more preferably 32 MPa or higher. The upper limit is not limited and a higher value is preferred. Normally, it is 60 MPa or lower.

The tensile strength is measured by the method described later in EXAMPLES.

The tensile elongation of the PTFE molded article is preferably 100% or higher, more preferably 130% or higher, still more preferably 160% or higher, particularly preferably 190% or higher. The upper limit is not limited and a higher value is preferred. Normally, it is 400% or lower.

The tensile elongation is measured by the method described later in EXAMPLES.

The transmittance of the PTFE molded article is preferably 30% or higher, more preferably 40% or higher, still more preferably 45% or higher, while it is preferably 80% or lower, more preferably 70% or lower, preferably 65% or lower.

The transmittance is a value obtained when a sample with a thickness of 0.3 mm is irradiated with light having a wavelength of 550 nm, and is measured by the method described later in EXAMPLES.

The PTFE molded article preferably has an endothermic peak temperature during the first temperature rise at least 2°C higher, more preferably at least 3°C higher, still more preferably at least 4°C higher than the endothermic peak temperature during the second temperature rise in measurement with a differential scanning calorimeter (DSC). The upper limit of the difference ("endothermic peak temperature during the first temperature rise" - "endothermic peak temperature during the second temperature rise") is not limited and is normally 30°C or less.

The DSC measurement is performed by the method described later in EXAMPLES.

If multiple endothermic peaks (local minimums) are present on the heat-of-fusion curve obtained by the DSC measurement, the highest temperature peak is taken as the endothermic peak temperature, regardless of the size of the peak area.

The endothermic peak temperature of the PTFE molded article during the first temperature rise in the DSC measurement is preferably 280°C or higher, more preferably 300°C or higher, still more preferably 330°C or higher, while it is preferably 450°C or lower, more preferably 420°C or lower, still more preferably 400°C or lower.

The endothermic peak temperature of the PTFE molded article during the second temperature rise in the DSC measurement is preferably 260°C or higher, more preferably 280°C or higher, still more preferably 300°C or higher, while it is preferably 430°C or lower, more preferably 400°C or lower, still more preferably 380°C or lower.

The degree of crystallinity of the PTFE molded article is preferably 10% or higher, more preferably 20% or higher, still more preferably 25% or higher, while it is preferably 95% or lower, more preferably 85% or lower, still more preferably 75% or lower.

The degree of crystallinity is measured by the method described later in EXAMPLES.

### <First polytetrafluoroethylene molded article>

A first polytetrafluoroethylene (PTFE) molded article of the disclosure has a tensile strength of 25 MPa or higher, a tensile elongation of 100% or higher, and an endothermic peak temperature during the first temperature rise in measurement with a differential scanning calorimeter of 330°C or higher. With such properties, a PTFE molded article excellent in tensile strength can be obtained.

In the first PTFE molded article of the disclosure, the same PTFE as that described in the production method of the disclosure can be used.

The first PTFE molded article of the disclosure can be produced, for example, by the production method of the disclosure. Adjustment of the conditions (e.g., pressure, temperature) during the production enables adjustment of various physical properties.

The tensile strength of the first PTFE molded article of the disclosure should be 25 MPa or higher, and is preferably 30 MPa or higher, more preferably 32 MPa or higher. The upper limit is not limited and a higher value is preferred. Normally, it is 60 MPa or lower.

The tensile elongation of the first PTFE molded article of the disclosure should be 100% or higher, and is preferably 130% or higher, more preferably 160% or higher, still more preferably 190% or higher. The upper limit is not limited and a higher value is preferred. Normally, it is 400% or lower.

The endothermic peak temperature of the first PTFE molded article of the disclosure during the first temperature rise in the DSC measurement should be 330°C or higher, and is preferably 450°C or lower, more preferably 420°C or lower, still more preferably 400°C or lower.

The endothermic peak temperature of the first PTFE molded article of the disclosure during the second temperature rise in the DSC measurement is preferably 260°C or higher, more preferably 280°C or higher, still more preferably 300°C or higher, while it is preferably 430°C or lower, more preferably 400°C or lower, still more preferably 380°C or lower.

The first PTFE molded article of the disclosure preferably has an endothermic peak temperature during the first temperature rise at least 2°C higher, more preferably at least 3°C higher, still more preferably at least 4°C higher than the endothermic peak temperature during the second temperature rise in measurement with a differential scanning calorimeter (DSC). The upper limit of the difference ("endothermic peak temperature during the first temperature rise" - "endothermic peak temperature during the second temperature rise") is not limited and is normally 30°C or less.

The degree of crystallinity of the first PTFE molded article of the disclosure is preferably 10% or higher, more preferably 20% or higher, still more preferably 25% or higher, while it is preferably 95% or lower, more preferably 85% or lower, still more preferably 75% or lower.

### <Second polytetrafluoroethylene molded article>

A second polytetrafluoroethylene (PTFE) molded article of the disclosure has an endothermic peak temperature during the first temperature rise at least 2°C higher, preferably at least 3°C higher, more preferably at least 4°C higher than the endothermic peak temperature during the second temperature rise in measurement with a differential scanning calorimeter. With such properties, a PTFE molded article excellent in tensile strength can be obtained.

The upper limit of the difference ("endothermic peak temperature during the first temperature rise" - "endothermic peak temperature during the second temperature rise") is not limited and is normally 30°C or less.

In the second PTFE molded article of the disclosure, the same PTFE as that described in the production method of the disclosure can be used.

The second PTFE molded article of the disclosure can be produced, for example, by the production method of the disclosure. Adjustment of the conditions (e.g., pressure, temperature) during the production enables adjustment of various physical properties.

The endothermic peak temperature of the second PTFE molded article of the disclosure during the first temperature rise in the DSC measurement is preferably 280°C or higher, more preferably 300°C or higher, still more preferably 330°C or higher, while it is preferably 450°C or lower, more preferably 420°C or lower, still more preferably 400°C or lower.

The endothermic peak temperature of the second PTFE molded article of the disclosure during the second temperature rise in the DSC measurement is preferably 260°C or higher, more preferably 280°C or higher, still more preferably 300°C or higher, while it is preferably 430°C or lower, more preferably 400°C or lower, still more preferably 380°C or lower.

The tensile strength of the second PTFE molded article of the disclosure is preferably 25 MPa or higher, more preferably 30 MPa or higher, still more preferably 32 MPa or higher. The upper limit is not limited and a higher value is preferred. Normally, it is 60 MPa or lower.

The tensile elongation of the second PTFE molded article of the disclosure is preferably 100% or higher, more preferably 130% or higher, still more preferably 160% or higher, particularly preferably 190% or higher. The upper limit is not limited and a higher value is preferred. Normally, it is 400% or lower.

The degree of crystallinity of the second PTFE molded article of the disclosure is preferably 10% or higher, more preferably 20% or higher, still more preferably 25% or higher, while it is preferably 95% or lower, more preferably 85% or lower, still more preferably 75% or lower.

The PTFE molded article obtained by the production method of the disclosure, the first PTFE molded article of the disclosure, and the second PTFE molded article of the disclosure may contain components (e.g., filler) other than PTFE.

The PTFE molded article obtained by the production method of the disclosure, the first PTFE molded article of the disclosure, and the second PTFE molded article of the disclosure are suitably used in fields such as sheets, lining sheets, packings, gaskets, diaphragm valves, release sheets, sealing materials, casings, sleeves, bellows, hoses, piston rings, butterfly valves, square tanks, and wafer carriers.

The PTFE molded article obtained by the production method of the disclosure, the first PTFE molded article of the disclosure, and the second PTFE molded article of the disclosure are excellent in tensile strength and elongation. Accordingly, by subjecting such a PTFE molded article to cutting processing, a PTFE sheet excellent in tensile strength and elongation can be obtained. The resulting PTFE sheet can be suitably used as a lining sheet, a packing, a gasket, or a diaphragm valve. Also, the resulting PTFE sheet can be suitably used as a heat-resistant insulation tape for vehicle motors and generators, a release sheet, or the like.

When containing a filler, the PTFE molded article obtained by the production method of the disclosure, the first PTFE molded article of the disclosure, and the second PTFE molded article of the disclosure can be suitably used as conductive sheets, heat dissipation sheets, or the like.

The PTFE molded article obtained by the production method of the disclosure, the first PTFE molded article of the disclosure, and the second PTFE molded article of the disclosure can be also suitably used as members for semiconductor manufacturing-related apparatuses. Examples of the members include containers, piping materials, nozzles, tubes, tanks, fittings, valves, pumps, housings, spin chucks, O-rings, packings, gaskets, washers, sealing materials, nuts, bolts, films, bottles, hoses, pipes, sheets, rollers, cocks, connectors, filter housings, filter cages, flowmeters, wafer carriers, and wafer boxes.

The PTFE molded article obtained by the production method of the disclosure, the first PTFE molded article of the disclosure, and the second PTFE molded article of the disclosure can be also suitably used as automobile-related members. Examples of the members include fuel tubes, fuel hoses, gaskets, sealing materials, cable coating materials, O-rings, packings, valve core materials, diaphragms, hoses, tanks, bellows, spacers, rollers, bumpers, door trims, and instrument panels.

The PTFE molded article obtained by the production method of the disclosure, the first PTFE molded article of the disclosure, and the second PTFE molded article of the disclosure can be also suitably used as electronic component materials such as flexible printed circuit boards, capacitor films, films for battery packages, or fuel cell stack materials. Also, they are suitably used for flexible devices, insulation in cryogenic environments such as superconductivity, and protection against chemicals in semiconductor manufacturing processes.

It should be appreciated that a variety of modifications and changes in the structure and other details may be made to the aforementioned embodiments without departing from the spirit and scope of the claims.

### EXAMPLES

The disclosure is described in more detail below with reference to examples, but is not limited to these examples.

### <Molded article containing recycled PTFE>

### Examples 1 to 6

A recycled PTFE (melting point: 327°C, MFR: 0 g/10 min, SSG: 2.17) was compressed at 30°C and 15 MPa for five minutes using a manual vacuum hydraulic heat press machine, whereby a pre-molded article was obtained. (First pre-molding step)

The resulting pre-molded article was compressed at 360°C and 15 MPa for one minute using a manual vacuum hydraulic heat press machine. (Second pre-molding step)

The pre-molded article after the second pre-molding step was placed in an electric muffle furnace (FUW232PA, Daiwa Keisoku Kabushiki Kaisha) and heated from room temperature to 300°C over 180 minutes, from 300°C to 370°C over 240 minutes, and then held at 370°C for 180 minutes. Then, the resulting pre-molded article was cooled to 300°C over 300 minutes, whereby a fired article was obtained.

### (Firing step)

The resulting fired article was rolled using a 100t lab machine (SVP10, Satoh Machinery Works Co., Ltd.) at a rolling temperature and a rolling pressure each shown in Table 1 or 2, whereby a molded article was obtained. (Rolling step)

### Comparative Example 1

A molded article was obtained by the same method as in Examples 1 to 6, except that the rolling step was not performed.

### <Molded article containing virgin PTFE>

### Example 7

A molded article was obtained by the same method as in Examples 1 to 6, except that the recycled PTFE was replaced with a virgin PTFE (melting point: 337.7°C, MFR: 0 g/10 min, SSG: 2.15).

### Comparative Example 2

A molded article was obtained by the same method as in Example 7, except that the second pre-molding step and the rolling step were not performed.

The molded articles were evaluated by the following methods. The results are shown in Tables 1 to 3.

### <Tensile strength and tensile elongation>

Dumbbell-shaped test pieces were prepared from the above molded articles, and the tensile strength (MPa) and tensile elongation (%) were measured in conformity with ASTM D638 at 25°C, a chuck distance of 24.5 mm, and a pulling speed of 50 mm/min.

### <DSC measurement>

Using an X-DSC7000 (available from Hitachi High-Tech Science Corporation) as a differential scanning calorimeter (DSC), the molded articles were heated to 380°C at a rate of 10°C/min, whereby first heat-of-fusion curves were obtained. Then, the molded articles were cooled to 200°C and again heated to 380°C under the same condition as in the first temperature rise, whereby second heat-of-fusion curves were obtained.

The endothermic peak temperature was calculated using the resulting heat-of-fusion curves. In the case where multiple endothermic peaks were observed, the highest temperature peak was taken as the endothermic peak temperature (melting point).

### <Degree of crystallinity>

The degree of crystallinity was calculated from the specific heat measured by a differential scanning calorimeter (DSC). It was calculated using the following formula with the theoretical heat of fusion of PTFE defined as 82.05 J/g.

Degree of crystallinity (%) = 100 × (Peak area derived from PTFE crystals/theoretical heat of fusion of PTFE)

The peak area derived from PTFE crystals refers to the total area of the peaks derived from PTFE crystals.

### <Transmittance>

Samples with a thickness of 0.3 mm were prepared from the molded articles, and the transmittance (%) when irradiated with light having a wavelength of 550 nm was measured using an ultraviolet spectrophotometer.

**[Table 1]**

| | | | Example 1 | Example 2 | Example 3 | Comparative Example 1 |
|---|---|---|---|---|---|---|
| First pre-molding step | Whether step is performed | - | ○ | ○ | ○ | ○ |
| Second pre-molding step | Whether step is performed | - | ○ | ○ | ○ | ○ |
| Firing step | Whether step is performed | - | ○ | ○ | ○ | ○ |
| Rolling step | Whether step is performed | - | ○ | ○ | ○ | - |
| | Rolling temperature | °C | 260 | 320 | 340 | - |
| | Rolling pressure | MPa | 707 | 707 | 707 | - |
| Tensile properties | Tensile strength | MPa | 34.5 | 31.9 | 34.6 | 13.5 |
| | Tensile elongation | % | 117 | 136 | 254 | 209 |
| Heat properties | Endothermic peak temperature (1st) | °C | 335.2 | 333.6 | 348.4 | 329.0 |
| | Endothermic peak temperature (2nd) | °C | 330.2 | 329.6 | 330.1 | 330.3 |
| | Difference in peak temperature | °C | 5.0 | 4.0 | 18.3 | -1.3 |
| | Degree of crystallinity | % | 71.1 | 52.7 | 27.9 | 44.2 |
| Transparency | Transmittance | % | 62.1 | 55.8 | - | - |

**[Table 2]**

| | | | Example 4 | Example 5 | Example 3 | Example 6 |
|---|---|---|---|---|---|---|
| First pre-molding step | Whether step is performed | - | ○ | ○ | ○ | ○ |
| Second pre-molding step | Whether step is performed | - | ○ | ○ | ○ | ○ |
| Firing step | Whether step is performed | - | ○ | ○ | ○ | ○ |
| Rolling step | Whether step is performed | - | ○ | ○ | ○ | ○ |
| | Rolling temperature | °C | 340 | 340 | 340 | 340 |
| | Rolling pressure | MPa | 120 | 226 | 707 | 1414 |
| Tensile properties | Tensile strength | MPa | 30.9 | 31.8 | 34.6 | 33.0 |
| | Tensile elongation | % | 274 | 248 | 254 | 246 |
| Heat properties | Endothermic peak temperature (1st) | °C | 342.8 | 347.5 | 348.4 | 350.5 |
| | Endothermic peak temperature (2nd) | °C | 330.0 | 329.6 | 330.1 | 329.8 |
| | Difference in peak temperature | °C | 12.8 | 17.9 | 18.3 | 20.7 |
| | Degree of crystallinity | % | 34.0 | 23.9 | 27.9 | 18.5 |

As shown in Tables 1 and 2, the tensile strength was improved and the tensile elongation was also at an acceptable level in Examples 1 to 6 in which the rolling step was performed, compared to Comparative Example 1 in which the rolling step was not performed. In other words, both the tensile strength and the tensile elongation were achieved in Examples 1 to 6.

In Examples 3 to 6 in which the rolling temperature was set to 340°C, both the tensile strength and the tensile elongation were improved compared to Comparative Example 1.

**[Table 3]**

| | | | Example 7 | Comparative Example 2 |
|---|---|---|---|---|
| First pre-molding step | Whether step is performed | - | ○ | ○ |
| Second pre-molding step | Whether step is performed | - | ○ | - |
| Firing step | Whether step is performed | - | ○ | ○ |
| Rolling step | Whether step is performed | - | ○ | - |
| | Rolling temperature | °C | 300 | - |
| | Rolling pressure | MPa | 707 | - |
| Tensile properties | Tensile strength | MPa | 53.5 | 41.0 |
| | Tensile elongation | % | 220.5 | 330.0 |
| Heat properties | Endothermic peak temperature (1st) | °C | 338.3 | 327.9 |
| | Endothermic peak temperature (2nd) | °C | 330.1 | 327.8 |
| | Difference in peak temperature | °C | 8.2 | 0.1 |
| | Degree of crystallinity | % | 37.8 | 28.5 |

As shown in Table 3, also in the case of a virgin PTFE, the rolling step improved the tensile strength.

## Claims

1. A method for producing a polytetrafluoroethylene molded article, comprising
a rolling step of rolling polytetrafluoroethylene at 50 MPa or higher to obtain a molded article.

2. The method for producing a polytetrafluoroethylene molded article according to claim 1,
wherein the rolling step is performed at 200°C or higher.

3. The method for producing a polytetrafluoroethylene molded article according to claim 1 or 2,
wherein the rolling step is performed at a pressure of 100 to 2000 MPa and a temperature of 200°C to 600°C.

4. The method for producing a polytetrafluoroethylene molded article according to any of claims 1 to 3, further comprising, prior to the rolling step,
a first pre-molding step of compressing the polytetrafluoroethylene at lower than 200°C to obtain a pre-molded article and
a firing step of heating the pre-molded article to a temperature equal to or higher than a melting point of the polytetrafluoroethylene to obtain a fired article,
wherein the rolling step involves rolling the fired article.

5. The method for producing a polytetrafluoroethylene molded article according to claim 4,
wherein the first pre-molding step is performed at a pressure of 5 to 45 MPa and a temperature of 30°C or higher and lower than 200°C, and
the firing step is performed at a heating temperature of 340°C to 500°C for a heating time of 5 minutes to 200 hours.

6. The method for producing a polytetrafluoroethylene molded article according to any of claims 1 to 5,
wherein the polytetrafluoroethylene has a history of being heated to a temperature equal to or higher than a melting point thereof and is non-melt-flowable.

7. A polytetrafluoroethylene molded article obtainable by the method for producing a polytetrafluoroethylene molded article according to any of claims 1 to 6,
the polytetrafluoroethylene molded article having a tensile strength of 25 MPa or higher and
a tensile elongation of 100% or higher.

8. The polytetrafluoroethylene molded article according to claim 7,
wherein the tensile strength is 25 to 60 MPa and the tensile elongation is 100% to 400%.

9. A polytetrafluoroethylene molded article having a tensile strength of 25 MPa or higher,
a tensile elongation of 100% or higher, and
an endothermic peak temperature during a first temperature rise in measurement with a differential scanning calorimeter of 330°C or higher.

10. The polytetrafluoroethylene molded article according to claim 9,
wherein the tensile strength is 25 to 60 MPa,
the tensile elongation is 100% to 400%, and
the endothermic peak temperature during the first temperature rise in measurement with a differential scanning calorimeter is 330°C to 450°C.

11. A polytetrafluoroethylene molded article having an endothermic peak temperature during a first temperature rise at least 2°C higher than an endothermic peak temperature during a second temperature rise in measurement with a differential scanning calorimeter.

12. The polytetrafluoroethylene molded article according to claim 11,
wherein a difference obtained by subtracting the endothermic peak temperature during the second temperature rise from the endothermic peak temperature during the first temperature rise in measurement with a differential scanning calorimeter is 2°C to 30°C.
